# EUROPÄISCHE PATENTANMELDUNG

(11) **EP 1 731 980 A1**
(43) Veröffentlichungstag der Anmeldung: **13.12.2006**
(21) Anmeldenummer: 06114026.5
(22) Anmeldetag: 16.05.2006
(51) Int. Cl.: G05B 19/418

(54) **Verfahren zur Reduktion des Datentransfers zwischen einem Feldgerät der Automatisierungstechnik und einer Steuereinheit**

(30) Priorität: 08.06.2005 DE 102005026521
(71) Anmelder: Endress + Hauser Process Solutions AG, 4153 Reinach (CH)
(72) Erfinder: Eiselt, Frank, 79639, Grenzach-Wyhlen (DE)
(74) Vertreter: Andres, Angelika Maria

(57) **Zusammenfassung**

Bei einem Verfahren zur Reduktion des Datentransfers zwischen einem Feldgerät der Automatisierungstechnik und einer Steuereinheit werden nicht mehr einzelne Messwerte zwischen dem Feldgerät F1 und der Steuereinheit SPS übertragen, sondern die Messwerte werden in der Steuereinheit SPS aufgrund des bekannten funktionalen Verlaufs bei einer bestimmten Anwendung (z. B. Tankentleerung) berechnet.

## Beschreibung

Die Erfindung betrifft ein Verfahren zur Reduktion des Datentransfers zwischen einem Feldgerät der Automatisierungstechnik und einer Steuereinheit.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Durchflussmessgeräte, Druck- und Temperaturmessgeräte, PH-Redoxpotentialmessgerät, Leitfähigkeitsmessgeräte etc., die als Sensoren die entsprechenden Prozessvariablen Füllstand, Durchfluss, Druck, Temperatur, PH-Wert bzw. Leitfähigkeitswert erfassen. Zur Beeinflussung von Prozessvariablen dienen Aktoren, z. B. Ventile oder Pumpen, die es erlauben den Füllstand in einem Behälter zu verändern.

Eine Vielzahl solcher Feldgeräte wird von der Fa. Endress+Hauser hergestellt und vertrieben.

Häufig sind Feldgeräte über einen Feldbus (Profibus, Foundation Fieldbus, HART etc.) mit übergeordneten Einheiten z. B. Leitsysteme bzw. Steuereinheiten (Speicherprogrammierbare Steuerung SPS) verbunden. Diese übergeordneten Einheiten dienen zur Prozesssteuerung, Prozessvisualisierung, Prozessüberwachung oder dem Asset-Management.

Zur Bedienung der Feldgeräte sind entsprechende Bedienprogramme notwendig. Diese Bedienprogramme können eigenständig ablaufen (FieldCare, Endress+Hauser; Pactware; AMS, Emerson; Simatic PDM, Siemens) oder aber auch in Leitsysteme-Anwendungen (Simatic Step 7, ABB Symphony, Delta V) integriert sein.

Für die sichere Prozesssteuerung ist ein kontinuierlicher Austausch von Daten insbesondere Messwerte zwischen den Feldgeräten und der Steuereinheit notwendig. Je mehr Feldgeräte an den Feldbus angeschlossen sind, desto mehr Daten müssen über den Feldbus übertragen werden Dies kann u. a. zu einer Überlastung des Feldbusses aufgrund des hohen Datentransfers führen. Für eine sichere Prozessüberwachung ist ein kontinuierliche Übertragung von Daten über den Feldbus notwendig. Mehr Feldgeräte am Bus können sich folgendermaßen auswirken:
- geringere Performance des Systems vor allem auf Grund der längeren Zykluszeiten
- mehr Kommunikationskomponenten
- mehr Speicherbedarf in der zentralen bzw. dezentralen Steuereinheit für die anfallenden Daten

Aufgabe der Erfindung ist es, ein Verfahren zur Reduktion des Datentransfers zwischen einem Feldgerät der Automatisierungstechnik und einer Steuereinheit anzugeben, das die oben genannten Nachteile nicht aufweist, und das zugleich eine sichere und lückenlose Prozessüberwachung ermöglicht.

Gelöst wird diese Aufgabe durch folgende im Anspruch 1 angegebenen Verfahrensmerkmale.

Verfahren zur Reduktion des Datentransfers zwischen einem Feldgerät der Automatisierungstechnik und einer Steuereinheit, gekennzeichnet durch folgende Verfahrensschritte

1. Vorgabe einer mathematische Funktion f(t,a), die den zeitlichen funktionalen Verlauf der Messwerte bei einem Prozess mit mindestens einem Koeffizienten a als Funktion der Variablen Zeit t beschreibt
2. Kontinuierliche Erfassung der Messwerte während des Prozesses
3. Vergleich der gemessenen Messwerte und zugehörigen berechneten Messwerte

Falls eine Übereinstimmung besteht, Bestimmung des zeitlichen Verlaufs der Messwerte in der Steuereinheit mit Hilfe der Funktion f und dem mindestens einen Koeffizienten a.

Vorteilhafte Weiterentwicklungen der Erfindung sind in den Unteransprüchen gegeben.

Die wesentliche Idee der Erfindung besteht darin, nicht mehr einzelne Messwerte an die Steuereinheit zu übertragen, sondern diese auf Seite der Steuereinheit aus einem vorgegebenen funktionalen Verlauf Messwerte zu gewinnen. Dies führt zu einer erheblichen Reduktion des Datentransfers zwischen Feldgeräten und Steuereinheiten.

Weichen die aktuellen Messwerte von dem durch Koeffizienten vorgegebenen funktionalen Verlauf ab, so erfolgt eine Neuanpassung der Koeffizienten und eine Übertragung der geänderten Koeffizienten an die Steuereinheit.

Es ist denkbar im Feldgerät mehrere mathematische Funktionen, die unterschiedlichen Prozessen zugeordnet sind, abzuspeichern und je nach Prozess entsprechend auszuwählen.

In einfacher Weise werden die mathematischen Funktionen als Funktionsblöcke im Feldgerät abgespeichert.

Nachfolgend ist die Erfindung anhand eines in der Zeichnung dargestellten Ausführungsbeispiels näher beschrieben.

Es zeigen:

Fig. 1 Kommunikationsnetzwerke der Prozessautomatisierungstechnik mit mehreren Feldgeräten in schematische Darstellung;

Fig. 2 a Tankanwendung in schematischer Darstellung

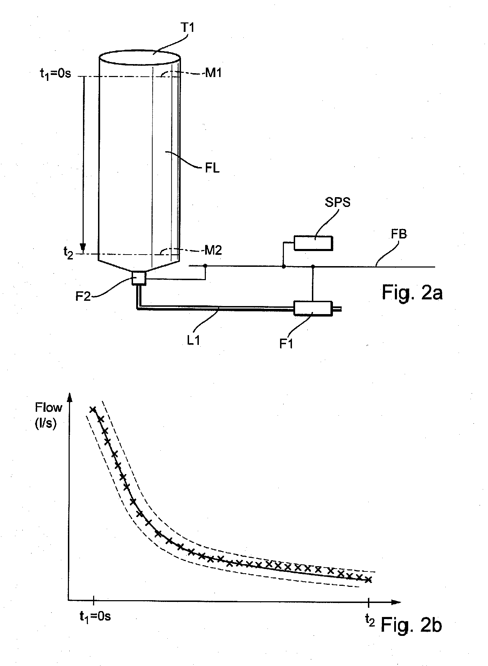

Fig. 2 b funktionaler Verlauf des Durchflusses bei einem Tankentleerungsprozess;

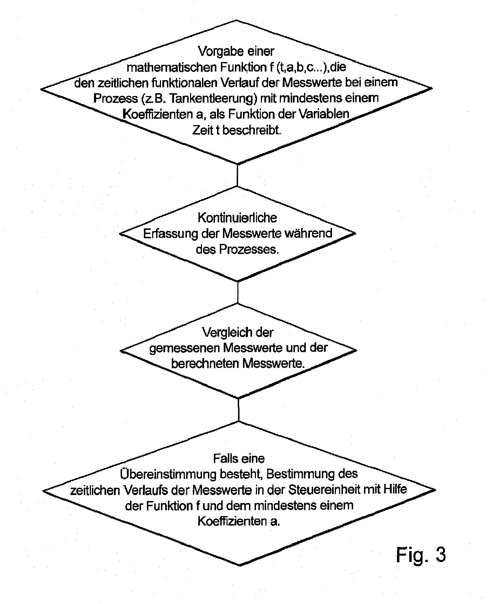

Fig. 3 Flussdiagram.

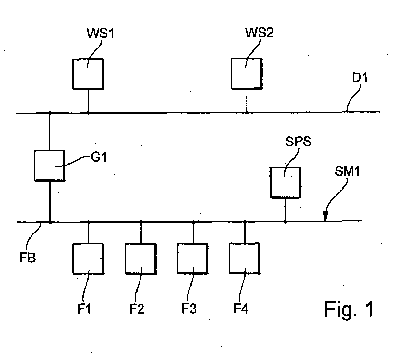

In Fig. 1 ist ein Kommunikationsnetzwerk der Prozessautomatisierungstechnik näher dargestellt. An einem Datenbus D1 sind mehrere Rechnereinheiten (Workstations) WS1, WS2 angeschlossen. Diese Rechnereinheiten können als übergeordnete Einheiten (Leitsystemen bzw. Steuereinheiten) zur Prozessvisualisierung, Prozessüberwachung zum Engineering aber auch zur Überwachung von Feldgeräten dienen.

Der Datenbus D1 arbeitet z. B. nach dem Profibus DP Standard oder nach dem HSE (High Speed Ethernet) - Standard der Foundation Fieldbus. Über ein Gateway G1, das auch als Linking Device oder auch als Segmentkoppler bezeichnet wird, ist der Datenbus D1 mit einem Feldbussegment SM1 verbunden. Das Feldbussegment SM1 besteht aus mehreren Feldgeräten F1, F2, F3, F4, die über einen Feldbus FB mit einer speicherprogrammierbaren Steuerung SPS verbunden sind. Bei den Feldgeräten F1, F2, F3, F4 kann es sich sowohl um Sensoren als auch um Aktoren handeln. Der Feldbus FB arbeitet entsprechend nach einem der bekannten Feldbusstandards Profibus, Foundation Fieldbus oder HART.

In Fig. 2 a ist eine Tankanwendung mit einem Tank T1, der mit einer Flüssigkeit FL gefüllt ist, schematisch dargestellt. Der Tank T1 wird über eine Abflussleitung L1 entleert. In der Abflussleitung L1 sind ein Durchflussmesser F1 und ein Ventil F2 angeordnet. Beide Feldgeräte F1 bzw. F2 sind jeweils mit der speicherprogrammierbaren Steuereinheit SPS über den Feldbus FB verbunden.

Nachfolgend ist der Prozess einer Tankentleerung näher beschrieben. Anfänglich ist der Tank T1 bis zur Marke M1 (gestrichelte Linie) mit Flüssigkeit FL gefüllt. Wird zum Zeitpunkt t₁ = 0 Sek. das Ventil F2 geöffnet, so fließt die Flüssigkeit FL aus dem Tank T1 ab und der Flüssigkeitsspiegel sinkt. Zum Zeitpunkt t₂ wird das Ventil F2 wieder geschlossen und der Flüssigkeitsspiegel ist bis zur Marke M2 abgesunken. Aufgrund der Änderung der physikalischen Bedingung (z. B. hydrostatischer Druck) während der Tankentleerung ist der Durchfluss der Abflussleitung L1 nicht konstant. Der zeitliche Verlauf der Messwerte zwischen den Zeitpunkten t₁ und t₂, der vom Durchflussmesser F1 aufgenommen wird, ist in Fig. 2 b dargestellt. Deutlich sieht man aus der Fig. 2 b, dass die Durchflussrate angegeben in Liter pro Sekunde im Laufe der Zeit abnimmt. Jedes Kreuz in Fig. 2 b stellt einen Messpunkt dar. Die Messpunkte lassen sich durch eine Funktion f beschreiben.

Bisher wurde bei einer Tankentleerung jeder Messwert einzeln an die Steuereinheit SPS übertragen. Anhand der Vielzahl von Messpunkten sieht man, dass ein hoher Datentransfer zwischen dem Feldgerät F1 und Steuerung SPS notwendig war.

Nachfolgend ist das erfindungsgemäße Verfahren näher beschrieben.

Da bei einem vorgegebenen Prozess, hier eine Tankentleerung der funktionale Verlauf der Messwerte im Wesentlichen immer gleich angenommen werden kann, kann der funktionale Verlauf in der Regel durch eine mathematische Funktion f beschrieben werden. Bei einer Tankentleerung wäre dies ganz vereinfacht die Funktion f mit f(t, a, b)= 1/ a * (t-b). Dieser funktionale Verlauf ist durch die durchgezogene Linie in Fig. 2b dargestellt.

Die Variablen der Funktion sind die Zeit t und die Koeffizienten a, b. Je nach Prozess sind ein oder auch mehr Koeffizienten zur Beschreibung des funktionalen Verlaufs notwendig. Ist der Anfangswert der Durchflussrate und die mathematische Abhängigkeit bekannt, so kann zu jedem Zeitpunkt die Durchflussrate (Messwert) in der Abflussleitung L1 bestimmen werden. Im Feldgerät F1 findet eine permanente Überprüfung der Koeffizienten a und b statt. Weicht der gemessene Verlauf von dem berechneten Verlauf ab, so stimmen die gemessenen Messwerte nicht mehr mit den berechneten Messwerten überein und die Koeffizienten a, b müssen neu angepasst und an die Steuereinheit SPS übermittelt werden.

Wann eine Anpassung der Koeffizienten notwendig wird hängt von der Breite eines vom Anwender vorgegebenen Fehlerbands ab, innerhalb dessen die einzelnen Messpunkte liegen müssen. Die Grenzen des Fehlerbandes sind gestrichelt dargestellt. Liegen Messwerte außerhalb dieses Fehlerbandes, so erfolgt eine Anpassung der Koeffizienten a, b. Im Normalfall ist für einen bestimmten Prozess (z. B. Tankentleerung) eine einmalige Übertragung des Startwertes bzw. der Koeffizienten a, b vom Feldgerät F1 an die Steuereinheit SPS notwendig. Der Startzeitpunkt wird von der Steuereinheit, durch ein entsprechendes Signal an das Ventil F2 selbst festgelegt.

Die wesentlichen Verfahrenschritte sind im Flussdiagramm gemäß Fig. 3 nochmals angegeben.

Aufgrund der vorhandenen Informationen kann in der Steuereinheit zu jedem Zeitpunkt die Durchflussrate in der Abflussleitung L1 bestimmt werden, ohne dass eine Übertragung der aktuellen Messwerte vom Feldgerät F1 an die Steuereinheit SPS notwendig ist.

Dadurch kann der Datentransfer zwischen Feldgerät F1 und der Steuereinheit SPS erheblich reduziert werden. Überlastungen des Feldbusses sind somit weitgehend ausgeschlossen.

Im Feldgerät können selbstverständlich mehrere mathematische Funktionen zu unterschiedlichen Prozessen (z. B. Tankentleerung etc.) gespeichert sein.

In vorteilhafter Weise werden die mathematischen Funktionen als Funktionsblock im Feldgerät abgespeichert.

Bei dem erfindungsgemäßen Verfahren wird nicht mehr eine Vielzahl von Messwerten an die Steuereinheit SPS übertragen, sondern nur meist einmalig der Startwert bzw. die Koeffizienten einer den Prozess charakterisierende mathematischen Funktion. Diese Informationen sind ausreichend, um in der Steuereinheit SPS Messwerte mit genügender Genauigkeit berechnen zu können, die mit den tatsächlich gemessenen Messwerten innerhalb der geforderten Genauigkeit übereinstimmen. Falls die Abweichungen zu groß werden, wird dies der Steuereinheit gemeldet bzw. es werden neue angepasste Koeffizienten an die Steuereinheit SPS übertragen. Mit den neuen Koeffizienten kann die Steuereinheit die Messwerte wieder mit der gewünschten Genauigkeit berechen.

## Patentansprüche

1. Verfahren zur Reduktion des Datentransfers zwischen einem Feldgerät der Automatisierungstechnik und einer Steuereinheit, **gekennzeichnet durch** folgende Verfahrensschritte -Vorgabe einer mathematische Funktion f(t,a), die den zeitlichen funktionalen Verlauf der Messwerte bei einem Prozess mit mindestens einem Koeffizienten a als Funktion der Variablen Zeit t beschreibt -Kontinuierliche Erfassung der Messwerte während des Prozesses -Vergleich der gemessenen Messwerte und zugehörigen berechneten Messwerte, Falls eine Übereinstimmung besteht, Bestimmung des zeitlichen Verlaufs der Messwerte in der Steuereinheit mit Hilfe der Funktion f und dem mindestens einen Koeffizienten a.

2. Verfahren nach Anspruch 1, **dadurch gekennzeichnet, dass** zum funktionalen Verlauf der Messwerte bei dem Prozess ein Fehlerband vorgegeben ist und falls Messwerte außerhalb diese Fehlerbandes liegen eine Neubestimmung des mindestens einem Koeffizienten a erfolgt, die danach an die Steuereinheit übertragen werden.

3. Verfahren nach einem der vorhergehenden Ansprüche, **dadurch gekennzeichnet, dass** im Feldgerät mehrere mathematische Funktionen, zu verschiedenen Prozessen abgespeichert sind, die auswählbar sind.

4. Verfahren nach einem der vorhergehenden Ansprüche, **dadurch gekennzeichnet, dass** die Funktionen als Funktionsblock im Feldgerät abgespeichert sind.
